# EUROPEAN PATENT SPECIFICATION

(11) **EP 0 691 060 B1**
(45) Date of publication and mention of the grant of the patent: **26.05.2004**
(21) Application number: 94910980.5
(22) Date of filing: 22.03.1994
(51) Int. Cl.: H04M 11/00, G08C 19/16, G08B 23/00, G08C 15/06

(54) **SYSTEM TO PROVIDE A REMOTE DISPLAY OF THE OPERATING CONDITION OF A WATER TREATMENT SYSTEM**
SYSTEM ZUR FERNANZEIGE DES BETRIEBSZUSTANDS EINES WASSERBEHANDLUNGSSYSTEMS
SYSTEME PERMETTANT DE FOURNIR UN AFFICHAGE A DISTANCE DE L'ETAT DE FONCTIONNEMENT D'UN SYSTEME DE TRAITEMENT D'EAU

(30) Priority: 22.03.1993 US 34016
(43) Date of publication of application: 10.01.1996
(73) Proprietor: ECOWATER SYSTEMS, INC., Woodbury, MN 55125-2913 (US)
(72) Inventor: JOHANSEN, James, Minnetonka, MN 55345 (US); ZIMMERMAN, Jeffrey, A., Blaine, MA 55434 (US)
(74) Representative: W.P. THOMPSON & CO.
(86) International application number: PCT/US1994/003039
(87) International publication number: WO 1994/022261

(56) References cited:
- EP-A- 0 510 519
- US-A- 3 700 814
- US-A- 4 289 931
- US-A- 4 830 757

## Description

### 1. FIELD OF THE INVENTION

This invention relates to apparatus utilizing a voice-type telephone system for remotely displaying the condition of a water treatment system having an electronic control.

### 2. BACKGROUND OF THE INVENTION

Water treatment systems, such as water softeners, are provided with electronic controls which are intended to automatically maintain the water treatment system in an operative condition. The distributors of such water treatment system generally also provide maintenance service on the units they have installed. If a water treatment system, such as a water softener installed in a home, is not treating the water properly, the user will call the distributor for service. The distributor would then make a service call to the users home to restore the system to proper operation. However, if the distributor had additional information on the system, such as specific information on the type of system, its currently programmed operating mode, and usage information, it might be possible for the distributor to give the user instructions over the phone which would return the system to proper operation. Even if that were not possible, the additional information could be useful to the distributor in determining what parts are equipment would most likely be necessary for servicing the unit.

Referring particularly to water softening systems, it is necessary to periodically regenerate the resin used for softening the water, when the softening ability of the resin has been expended to a predetermined level. The regeneration of the resin requires a circulation of a regeneration medium through the resin such as a sodium chloride brine solution. The automatic electronic control system will provide the required regeneration when necessary. When using a softener having only one resin bed, the resin regeneration is typically scheduled during the early morning hours when water usage is at a minimum. Further, the regeneration is initiated prior to complete exhaustion of the resin and more particularly based on usage, prior to exhaustion to a level which would possibly result in there not being enough capacity left for softening in the next day's water usage.

If such a water softener should continue to operate without electronic or mechanical malfunctions, all that is necessary to maintain the proper operation of the softener is the addition of salt prior to its exhaustion for providing the brine for regenerating the resin. The distributors of water softeners will frequently provide the service of replenishing the salt used by the water softener on a regular basis. When an average usage of water processed by a softener has been established, it is possible to establish a salt delivery schedule which will ensure that the softener does not run out of salt. However, should there be an unusually large usage of softened water, or should there be a malfunction in the softener control such that it should regenerate more frequently than necessary, it would be necessary to restore the salt supply at an earlier interval than expected. If the salt is not restored when exhausted, a regeneration of the resin bed will be unsuccessful and hard water will be provided to the consumer.

When electronic controls are provided on a softener, information can be stored in electronic form, in electronic memory modules, with respect as to the configuration of the softener and equipment installed, the program settings of the softener and information on the usage of the softener. An arrangement for making this information available to the provider of service to the softener at remote locations, would allow for a diagnosis of softener operation without the servicer having to make an on-site inspection of the softener. This, for instance, would be of particular value wherein the servicer of softeners has a large number of softeners spread over a large geographic area, such as in a lightly populated, rural area. In such cases, it would be desirable for the servicer to periodically obtain information with respect to the softeners which they must service.

EP-A-0 510 519 describes a remote display for a television whereby a customer service manager can decide whether a repair is worthwhile or which replacement parts or subassemblies are required for repair, to dispatch a customer service engineer to the customer with the replacement parts. This could not be used for monitoring water treatment systems and has no facility for communication with a user in situ.

US 4 830 757 describes a water quality monitor and management computer which accesses monitoring transducers and operates valves and pumps to bleed the system or add chemicals as appropriate. Status checks are performed automatically by a polling computer and a separate modem is provided at both the remote stations and the polling station.

### SUMMARY OF THE INVENTION

Accordingly, it is an object of this invention to provide an apparatus whereby the operating condition of a water treatment system, such as a water softener having an electronic control, may be displayed at a remote site. It is further desirable that this apparatus be simple to install and use and not significantly increase the cost of the water treatment system. It is a further object of this invention to provide such an apparatus wherein it is not necessary to install equipment permanently attached to the telephone, power or other electrical carrier lines for the transmission of information to the remote site.

In accordance with one aspect of this invention there is provided a system for providing a remote display of the operating status of a water treatment system, said water treatment system having an electronic control, an electronic memory an associated with said electronic control for storing data indicative of the operating status of said water treatment system, a tone generator associated with said electronic memory for transmitting said data in the form of tone pulses via a telephone system including a microphone, a decoding means at a location remote from said water treatment system, said decoding means receiving said tone pulses transmitted through said telephone system, and providing an output of digital signals indicative of said operating status of said water treatment system,
a second electronic control for processing said digital signals so as to provide a readable display of said operating status of said water treatment system at the location remote from said water treatment system,
the system being characterized by
means selectively operable by a user for activating said tone generator to generate said tone pulses,
means for providing, from the remote location to said user, instructions to effect a change to the operating status of the water treatment system to correct a problem if possible.
In this way the service technician immediately knows what to correct on the water treatment system and can prepare for the work. The second electronic means may be a microcomputer or a personal computer provided with a program wherein information concerning the operating condition of the water treatment system may be displayed on a monitor or printed by a printer in a form readily readable by a service person, who is thereby apprised of the operating condition of the water treatment system.

Preferably the telephone system is of at least voice grade.

The tone pulses may be generated in a synchronous format for example one start bit, eight data bits and one stop bit.

The decoding means may include a dual feedback bandpass filter and an operational amplifier comparator connected in series with an automatic gain control circuit connected in parallel with said amplifier and dual feedback bandpass filter.

According to one embodiment the decoding means includes an isolation transformer which provides said tone pulses to an operational amplifier connected in series with a dual feedback bandpass filter, an automatic gain control circuit is connected in parallel with said operational amplifier and dual feedback bandpass filter with the output of said dual feedback filter being provided as an input to an operational amplifier comparator which provides a digital signal output. The water treatment system may be a water softener system.

According to a second aspect of the invention there is a method for helping a user with repair of a water treatment system, the method comprising the steps of: storing data indicative of the operating status of the water treatment system (14),
determining that there is a malfunction in the water treatment system;
transmitting said data in the form of tone pulses via a telephone system including a microphone,
receiving said tone pulses transmitted through said telephone system, at a location remote from said water treatment system, and providing an output of digital signals indicative of said operating status of said water treatment system,
processing said digital signals so as to provide a readable display of said operating status of said water treatment system at the location remote from said water treatment system,
the method being characterized by
a user selectively activating said tone generator to generate said tone pulses,
providing, from the location remote from said user, instructions to effect a change to the operating status of the water treatment system to correct a problem if possible.

In one embodiment the user contacts the water treatment service provider by telephoning the repair service provider.

The transmitting step may include placing a microphone near a tone generator, which relays tone pulses over the telephone to a decoder means, which the service provider reads over either a personal computer monitor or a printed report.

The user may correct the problem after receiving instructions from the service provider or schedules an appointment with the service provider if the user cannot fix the problem by themselves.

### BRIEF DESCRIPTION OF THE DRAWINGS

FIG. 1 is a schematic diagram of the apparatus of this invention.
FIG. 2 is a block diagram of the preferred embodiment of the decoding means of this invention.
FIG. 3 is a detailed schematic diagram of the preferred decoding means of this invention.
FIGS. 4a through 4h are displays typical of those provided by the apparatus of this invention.

### DETAILED DESCRIPTION OF THE PREFERRED EMBODIMENT

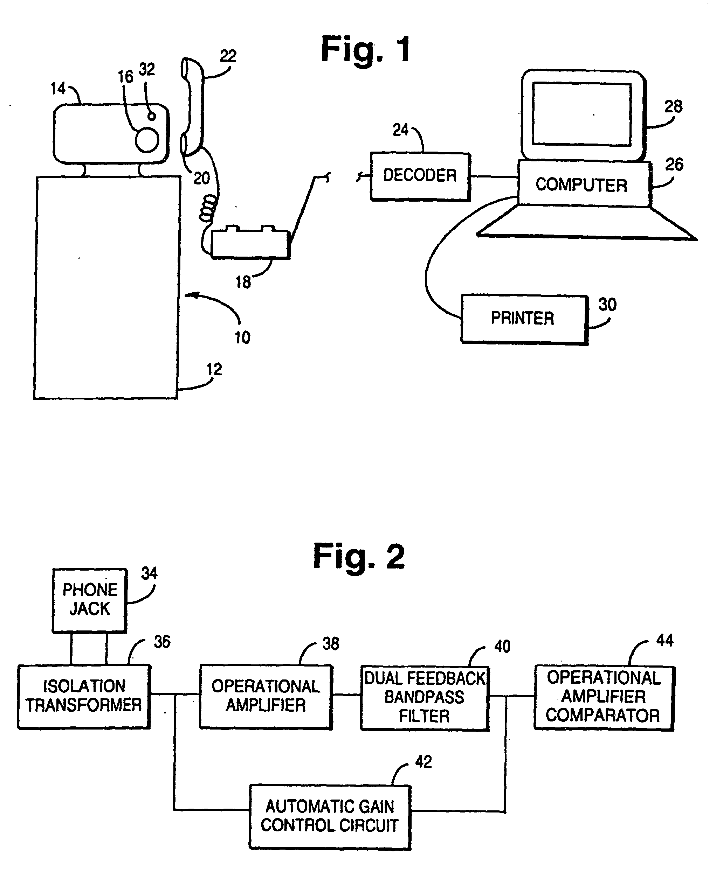

Referring to FIG. 1, the major components of the apparatus for providing a remote display of the operating condition of a water treatment system in accordance with this invention are shown. The water treatment system as shown at 10 is a representation of a water softening system having a principal enclosure 12 which contains both the resin tank and a storage area for the salt used to create the sodium chloride brine solution used to recharge the resin. The operation of the water softener 10 is controlled by an electronic controller located within a control housing 14. The electronic control includes an electronic memory which stores information concerning the operating conditions of the softener including its configuration, program settings and usage information amongst other data.

A tone generator associated with the electronic controller is designed to generate tone bursts which are indicative of the data stored within the electronic memory. The dashed circle 16 us intended to represent the output of the tone generator which is located behind the face of the controller housing. A typical voice operated telephone 18 is located such that a speaker 20 of a handset 22 may be placed adjacent to the output 16 of the tone generator. By dialling an appropriate phone number the phone 18 is connected to a decoder 24 located at the remote site at which information concerning the softener is desired. The output of the decoder 24 is provided to an electronic means shown as a personal computer 26 which is programmed to provide visually readable display of the operating condition of the water treatment system, either on the monitor 28 as shown or as printed by a printer 30.

The decoder and personal computer 26 would in a typical application be located at the business site of the distributor providing service to the water treatment device 10. In a normal usage of the apparatus of this invention, the distributor would request the user of the softener to dial an appropriate phone number and then place the microphone 10 adjacent to the tone generator output 16 and actuate a switch 32 to activate the tone generator so as to transmit data to the distributor. The distributor would typically make this request in response to a service call, or to determine if a salt delivery were needed. If the request were made in response to a service call, the distributor might be able to provide instructions to the user which if followed would correct the problem which gave rise to the service call. If correction of the problem could not be made by providing directions to the user, the information would be useful to the distributor in determining what service and service parts would most likely be necessary to correct the problem giving rise to the service call.

A more detailed block diagram of a preferred. embodiment of the decoder 24 of this invention is shown, in FIG. 2. As shown in FIG. 2, the decoder receives its input through a phone jack 34 which is connected through an isolation transformer 36 to the input of an operational amplifier 38. The output of the operational amplifier 38 is in turn provided to a dual feedback bandpass filter 40 which also provides amplification. To assure proper operation and an output at an appropriate signal level, an automatic gain control circuit 42 is connected between the output of the dual feedback bandpass filter 40 and the input to the amplifier 38. The output of the dual feedback bandpass filter 40 is provided to an operational amplifier comparator 44, which in turn provides signals appropriate for application to the electronic means for displaying the operating condition of the system, such as the personal computer 26 shown in FIG. 1.

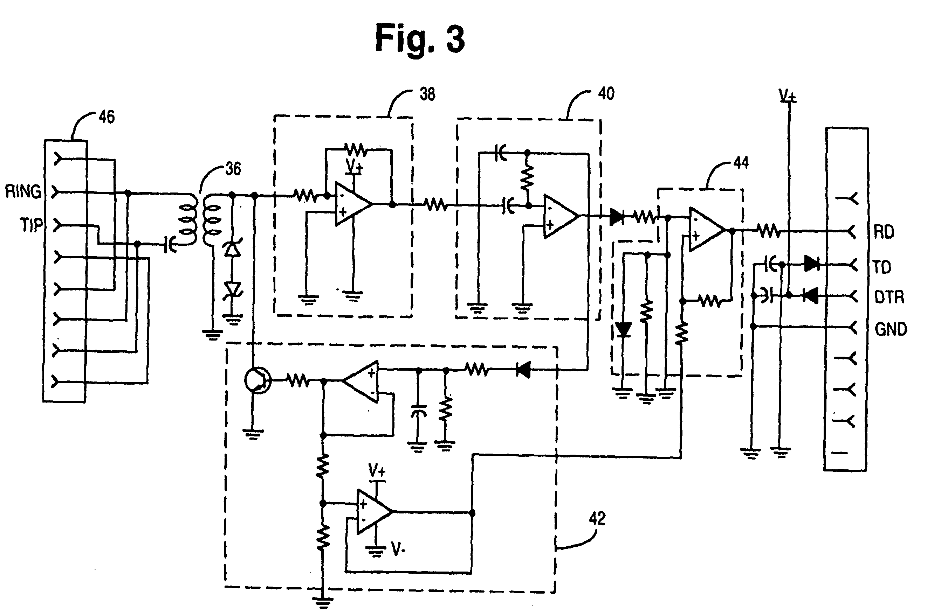

Referring to FIG. 3, a detailed circuit diagram is set forth for the decoding means shown in the block diagram of FIG. 2. A signal from a phone jack 46 is provided to the operational amplifier 38 through an isolation transformer T1. A capacitor C1 prevents DC current from flowing in the transformer primary, thereby preventing an "off-hook" signal from being generated and transmitted to the telephone network. The output of the operational amplifier 38 is coupled to the input of the dual feedback bandpass filter 40 by a resistor R7.

The output of the dual feedback bandpass filter 40 is in turn supplied to the input of the operational amplifier comparator 44 through a diode CR2 and a resistor R12. The output of the dual bandpass filter 40 is also rectified, filtered and fed back to the input by automatic gain control circuit 42 in such a proportion so as to maintain the output signal level relatively constant in amplitude for varying input signal levels. Those skilled in the art will appreciate this technique as a form of automatic gain control (AGC). This technique provides compensation for variances in telephone system signal losses, and tone generator signal strengths.

The operational amplifiers included in the amplifier 38, the dual feedback bandpass filter 40, the operational amplifier comparator 44 and the automatic gain control 42 in a preferred embodiment are provided by a low power quad operational amplifier such as an LM 324.

In a preferred embodiment of this invention, the tone generator provides tone bursts in an asynchronous format consisting of one start bit, 8 data bits, and one stop bit. Persons skilled in the art will recognize this data format as one commonly used to transfer data in serial fashion. Furthermore, it is a data format which, once converted to digital values, is readily accepted by mort personal computer serial input ports. In the preferred embodiment of this invention, the tone burst is at a frequency of 2048 Hertz, and the asynchronous data transmission rate is 50 bits per second. Further, in the preferred embodiment, the gain of the amplifier 38 is 16, and the band width of the bandpass filter 40 is 200 Hertz with a gain of 8.

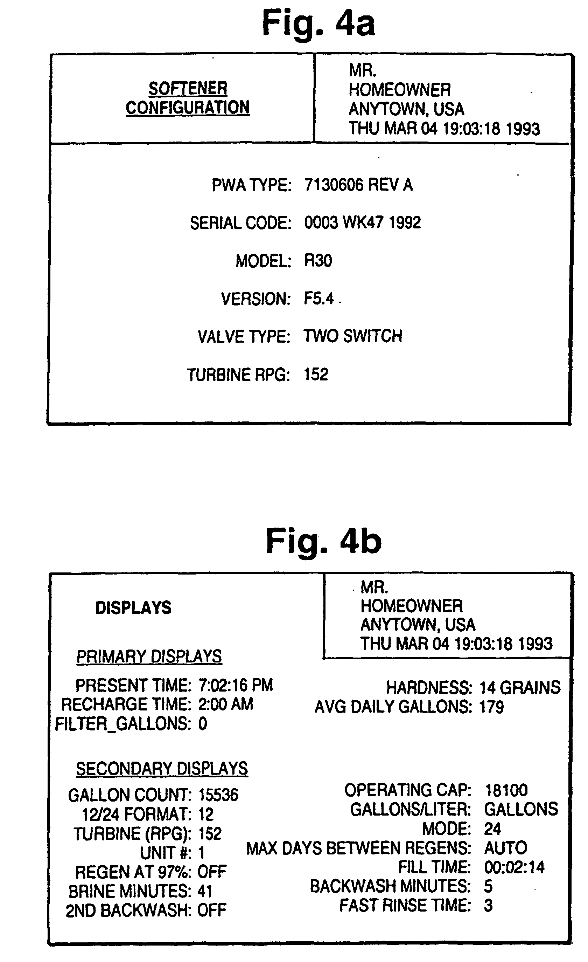

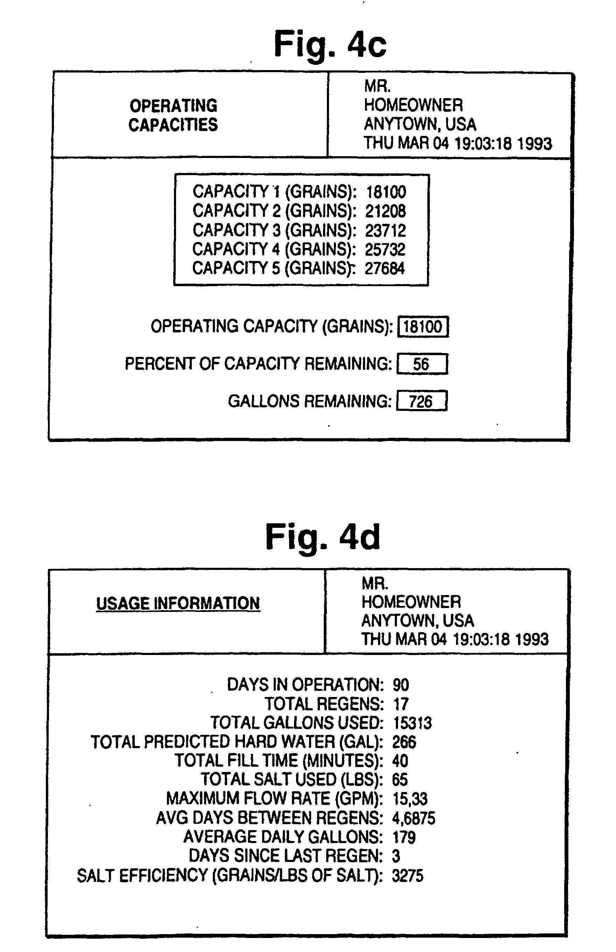

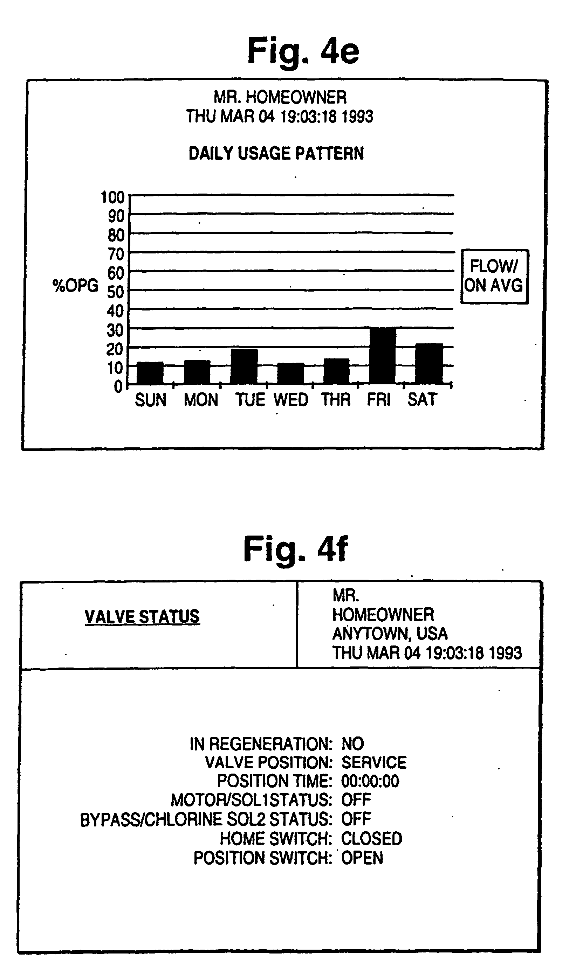

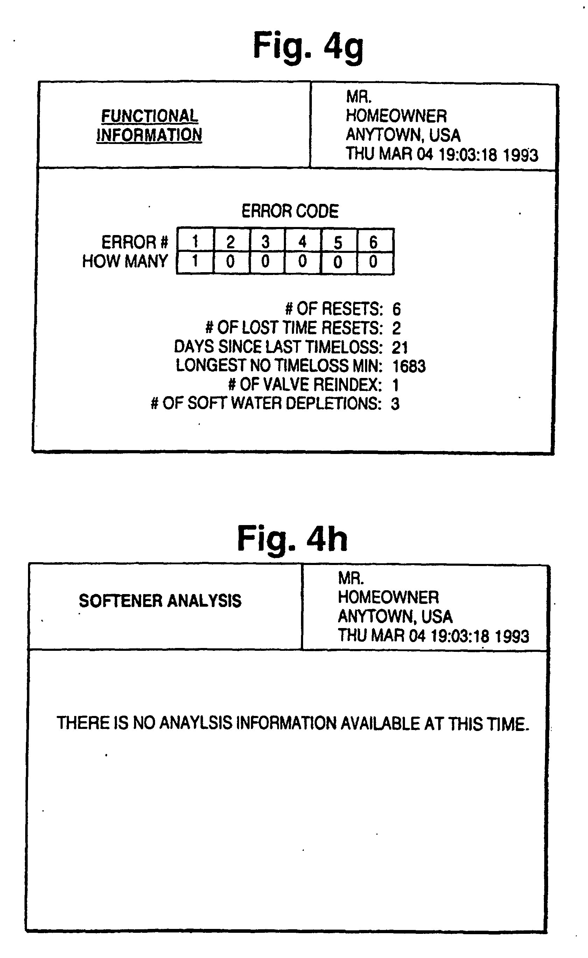

Referring to FIGS. 4a through 4h, typical displays of the operating condition of a softener as would result from the use of the apparatus of this invention is set forth. FIG. 4a, Softener Configuration, provides information on the configuration of the installed softener. FIG. 4b, Displays, provides information on operating parameters including those which were programmed specific to the installation. FIG. 4c, operating capacities, provides information on the softening capacity of the system at various capacity settings. FIG. 4d, Usage Information, provides an operating history of the softener. FIG. 4e, Daily Usage Pattern, provides a bar chart setting forth usage by day of the week. FIG. 4f, Valve Status, setting forth current operating parameters of the softener control valve. FIG. 4g, Functional Information, provides information on the operation history of the softener. FIG. 4h, softener Analysis, provides an analysis of the operation of the softener when appropriate.

It should be apparent to those skilled in the art that what has been described is considered at present to be a preferred embodiment of the apparatus of this invention for providing a remote display of the operating condition of a water treatment system having an electronic control.

## Claims

1. A system for providing a remote display of the operating status of a water treatment system (10) said system having
an electronic control,
an electronic memory associated with said electronic control for storing data indicative of the operating status of said water treatment system (14),
a tone generator (16) associated with said electronic memory for transmitting said data in the form of tone pulses via a telephone system including a microphone,
a decoding means (24) at a location remote from said water treatment system, said decoding means receiving said tone pulses transmitted through said telephone system, and providing an output of digital signals indicative of said operating status of said water treatment system,
a second electronic control (26) for processing said digital signals for providing a readable display of said operating status of said water treatment system at the location remote from said water treatment system,
the system being **characterized by**
means (32) selectively operable by a user for activating said tone generator adapted to generate said tone pulses,
means for providing, from the remote location to said user, instrutions adapted to effect a change to the operating status of the water treatment system for correcting a problem if possible.

2. The system of claim 1 **characterized in that** said telephone system is of at least voice grade.

3. The system of claim 1 or 2 **characterized in that** said second electronic means is a microcomputer.

4. The system of claim 1 or 2 **characterized in that** said second electronic means is a personal computer (26).

5. The system of claim 4 **characterized in that** said personal computer (26) is provided with program for displaying the operating status of said water processing system (10) derived from said digital signals.

6. The system of any one of claims 1 to 5 **characterized in that** said tone pulses are generated in an asynchronous format.

7. The system of claim 6 **characterized in that** said asynchronous format includes 1 start bit, 8 data bits and 1 stop bit.

8. The system of claim 7 **characterized in that** said data bits represent a logic level " 1" or a logic level "0".

9. The system of claim 8 **characterized in that** one of said logic levels is represented by a tone period of 30 msec. followed by a non-tone period of 10 msec. and the other of said logic levels is represented by a tone period of 10 msec. followed by a non-tone period of 25 msec.

10. The system of any one of the preceding claims **characterized in that** said digital signals are represented by two logic levels, one of said logic levels being represented by a tone period of 30 msec. followed by a non-tone period of 10 msec. and the other of said logic levels is represented by a tone period of 10 msec. followed by a non-tone period of 25 msec.

11. The system of any one of the preceding claims **characterized in that** said decoding means includes an amplifier (38), a dual feedback bandpass filter (40) and an operational amplifier comparator (44) connected in series with an automatic gain control circuit (42) connected in parallel with said amplifier (38) and dual feedback bandpass filter (40).

12. The system of any one of the preceding claims **characterized in that** said decoding means includes an isolation transformer which provides said tone pulses to an operational amplifier connected in series with a dual feedback bandpass filter (40), an automatic gain control circuit (42) is connected in parallel with said operational amplifier and dual feedback bandpass filter (40) with the output of said dual feedback filter (40) being provided as an input to an operational amplifier comparator (44) which provides a digital signal output.

13. The system of any one of the preceding claims **characterized in that** the water treatment system (10) is a water softener system.

14. A method for helping a user with repair of a water treatment system, the method comprising the steps of:
storing data indicative of the operating status of the water treatment system (14),
determining that there is a malfunction in the water treatment system;
transmitting said data in the form of tone pulses via a telephone system including a microphone, receiving said tone pulses transmitted through said telephone system, at a location remote from said water treatment system (10), and providing an output of digital signals indicative of said operating status of said water treatment system (10),
processing said digital signals for providing a readable display of said operating status of said water treatment system (10) at the location remote from said water treatment system (10),
the method being **characterized by**
a user selectively activating a tone generator (16) adapted to generate said tone pulses,
providing, from the location remote from said user, instructions adapted to effect a change to the operating status of the water treatment system (10) for correcting a problem if possible.

15. The method of claim 14 wherein the step of determining includes the user reading the output indicating a problem with the water treatment system (10).

16. The method of claim 14 wherein the user contacts the water treatment service provider by telephoning a distributor service provider.

17. The method of claim 16 wherein the step of transmitting includes placing a microphone near the tone generator (16), which relays tone pulses over the telephone to a decoder means, which the distributor service provider reads over a either a personal computer monitor or a printed report.

18. The method of claim 17 wherein said user corrects the problem after receiving instructions from the distributor service provider.

## Patentansprüche

1. System zum Bereitstellen einer Fernanzeige des Betriebsstatus einer Wasseraufbereitungsanlage (10), wobei das genannte System Folgendes umfasst:
eine elektronische Steuerung,
einen elektronischen Speicher in Verbindung mit der genannten elektronischen Steuerung zum Speichern von Daten, die den Betriebszustand der genannten Wasseraufbereitungsanlage (14) anzeigt,
einen Tongenerator (16) in Verbindung mit dem genannten elektronischen Speicher zum Übertragen der genannten Daten in der Form von Tonimpulsen über ein Telefonsystem mit einem Mikrofon,
ein Decodiermittel (24) an einem Ort entfernt von der genannten Wasseraufbereitungsanlage, wobei das genannte Decodiermittel die genannten, durch das genannte Telefonsystem übertragenen Tonimpulse empfängt und einen Ausgang von digitalen Signalen erzeugt, die den genannten Betriebsstatus der genannten Wasseraufbereitungsanlage anzeigen,
eine zweite elektronische Steuerung (26) zum Verarbeiten der genannten digitalen Signale zum Bereitstellen einer ablesbaren Anzeige des genannten Betriebsstatus der genannten Wasseraufbereitungsanlage an dem Ort entfernt von der genannten Wasseraufbereitungsanlage,
wobei das System **gekennzeichnet ist durch**
Mittel (32), die von einem Benutzer selektiv betätigt werden können, um einen Tongenerator zu aktivieren, der die Aufgabe hat, die genannten Tonimpulse zu erzeugen,
Mittel zum Bereitstellen, von dem entfernten Ort zu dem genannten Benutzer, von Anweisungen zum Bewirken einer Änderung des Betriebszustands der Wasseraufbereitungsanlage, um ein Problem, falls möglich, zu beheben.

2. System nach Anspruch 1, **dadurch gekennzeichnet, dass** das genannte Telefonsystem wenigstens von Sprachqualität ist.

3. System nach Anspruch 1 oder 2, **dadurch gekennzeichnet, dass** das genannte zweite elektronische Mittel ein Mikrocomputer ist.

4. System nach Anspruch 1 oder 2, **dadurch gekennzeichnet, dass** das genannte zweite elektronische Mittel ein Personal Computer (26) ist.

5. System nach Anspruch 4, **dadurch gekennzeichnet, dass** der genannte Personal Computer (26) ein Programm zum Anzeigen des Betriebsstatus der genannten Wasseraufbereitungsanlage (10) aufweist, der von den genannten digitalen Signalen abgeleitet ist.

6. System nach einem der Ansprüche 1 bis 5, **dadurch gekennzeichnet, dass** die genannten Tonimpulse in einem asynchronen Format erzeugt werden.

7. System nach Anspruch 6, **dadurch gekennzeichnet, dass** das genannte asynchrone Format 1 Startbit, 8 Datenbits und 1 Stopbit beinhaltet.

8. System nach Anspruch 7, **dadurch gekennzeichnet, dass** die genannten Datenbits einen logischen Pegel "1" oder einen logischen Pegel "0" repräsentieren.

9. System nach Anspruch 8, **dadurch gekennzeichnet, dass** einer der genannten Logikpegel durch eine Tonperiode von 30 ms, gefolgt von einer Nicht-Tonperiode von 10 ms und der andere der genannten Logikpegel durch eine Tonperiode von 10 ms, gefolgt von einer Nicht-Tonperiode von 25 ms repräsentiert wird.

10. System nach einem der vorherigen Ansprüche, **dadurch gekennzeichnet, dass** die genannten digitalen Signale von zwei Logikpegeln repräsentiert werden, wobei einer der genannten Logikpegel durch eine Tonperiode von 30 ms, gefolgt von einer Nicht-Tonperiode von 10 ms und der andere der genannten Logikpegel durch eine Tonperiode von 10 ms, gefolgt von einer Nicht-Tonperiode von 25 ms repräsentiert wird.

11. System nach einem der vorherigen Ansprüche, **dadurch gekennzeichnet, dass** das genannte Decodiermittel einen Verstärker (38), einen dualen Feedback-Bandpassfilter (40) und einen Operationsverstärkerkomparator (44) umfasst, der in Reihe mit einer Verstärkungsregelungsschaltung (42) verbunden ist, die parallel zu dem genannten Verstärker (38) und dem dualen Feedback-Bandpassfilter (40) geschaltet ist.

12. System nach einem der vorherigen Ansprüche, **dadurch gekennzeichnet, dass** das genannte Decodiermittel einen Isolationstransformator beinhaltet, der die genannten Tonimpulse zu einem in Reihe mit einem dualen Feedback-Bandpassfilter (40) geschalteten Operationsverstärker sendet, eine Verstärkungsregelungsschaltung (42) parallel zu dem genannten Operationsverstärker und dem dualen Feedback-Bandpassfilter (40) geschaltet ist, wobei der Ausgang des genannten dualen Feedback-Filters (40) als Eingang an einen Operationsverstärkerkomparator (44) angelegt wird, der einen digitalen Signalausgang erzeugt.

13. System nach einem der vorherigen Ansprüche, **dadurch gekennzeichnet, dass** die Wasseraufbereitungsanlage (10) eine Wasserenthärtungsanlage ist.

14. Verfahren, um einem Benutzer bei der Reparatur einer Wasseraufbereitungsanlage zu assistieren, wobei das Verfahren die folgenden Schritte umfasst:
Speichern von Daten, die den Betriebszustand der Wasseraufbereitungsanlage (14) anzeigen,
Ermitteln, dass eine Fehlfunktion in der Wasseraufbereitungsanlage vorliegt;
Übertragen der genannten Daten in der Form von Tonimpulsen über ein Telefonsystem mit einem Mikrofon,
Empfangen der genannten durch das genannte Telefonsystem übertragenen Tonimpulse an einem Ort entfernt von der genannten Wasseraufbereitungsanlage (10) und Erzeugen eines Ausgangs von digitalen Signalen, die den genannten Betriebszustand der genannten Wasseraufbereitungsanlage (10) anzeigen,
Verarbeiten der genannten digitalen Signale zum Erzeugen einer ablesbaren Anzeige des genannten Betriebszustands der genannten Wasseraufbereitungsanlage (10) an einem Ort entfernt von der genannten Wasseraufbereitungsanlage (10), wobei das genannte Verfahren **gekennzeichnet ist durch**
selektives Aktivieren eines Tongenerators (16) **durch** einen Benutzer, um die genannten Tonimpulse zu erzeugen,
Bereitstellen von Anweisungen von dem von dem genannten Benutzer entfernten Ort mit dem Ziel, eine Änderung des Betriebszustands der Wasseraufbereitungsanlage (10) zu bewirken, um ein Problem, falls möglich, abzustellen.

15. Verfahren nach Anspruch 14, wobei der Schritt des Ermittelns beinhaltet, dass der Benutzer den ein Problem mit der Wasseraufbereitungsanlage (10) anzeigenden Ausgang abliest.

16. Verfahren nach Anspruch 14, wobei der Benutzer den Anbieter des Wasseraufbereitungsdienstes durch Telefonieren eines Verteilungsdiensteanbieters kontaktiert.

17. Verfahren nach Anspruch 16, wobei der Schritt des Übertragens das Platzieren eines Mikrofons in der Nähe des Tongenerators (16) beinhaltet, der Tonimpulse über das Telefon zu einem Decodiermittel weiterleitet, das der Verteilerdiensteanbieter entweder über einen PC-Monitor oder über einen ausgedruckten Bericht abliest.

18. Verfahren nach Anspruch 17, wobei der genannte Benutzer das Problem behebt, nachdem er Anweisungen von dem Verteilerdiensteanbieter erhalten hat.

## Revendications

1. Système de fourniture d'un affichage à distance de l'état de fonctionnement d'un système de traitement d'eau (10), ledit système ayant
une commande électronique,
une mémoire électronique associée à ladite commande électronique pour mémoriser des données indicatives de l'état de fonctionnement dudit système de traitement d'eau (14),
un générateur de tonalités (16) associé à ladite mémoire électronique pour transmettre lesdites données sous forme d'impulsions de tonalité par l'intermédiaire d'un système téléphonique comportant un microphone,
un moyen de décodage (24) situé à un emplacement distant dudit système de traitement d'eau, ledit moyen de décodage recevant lesdites impulsions de tonalité transmises par le biais dudit système téléphonique, et fournissant une sortie de signaux numériques indicatifs dudit état de fonctionnement dudit système de traitement d'eau,
une deuxième commande électronique (26) pour traiter lesdits signaux numériques pour fournir un affichage lisible dudit état de fonctionnement dudit système de traitement d'eau situé à l'emplacement distant dudit système de traitement d'eau,
le système étant **caractérisé par**
un moyen (32) actionnable sélectivement par un utilisateur pour activer un générateur de tonalités adapté en vue de générer lesdites impulsions de tonalité,
un moyen pour fournir, depuis l'emplacement distant audit utilisateur des instructions adaptées en vue d'effectuer un changement de l'état de fonctionnement du système de traitement d'eau pour corriger si possible un problème.

2. Système selon la revendication 1, **caractérisé en ce que** ledit système téléphonique est d'au moins une qualité vocale.

3. Système selon la revendication 1 ou 2, **caractérisé en ce que** ledit deuxième moyen électronique est un micro-ordinateur.

4. Système selon la revendication 1 ou 2, **caractérisé en ce que** ledit deuxième moyen électronique est un ordinateur individuel (26).

5. Système selon la revendication 4, **caractérisé en ce que** ledit ordinateur individuel (26) est doté d'un programme pour afficher l'état de fonctionnement dudit système de traitement d'eau (10) dérivé desdits signaux numériques.

6. Système selon l'une quelconque des revendications 1 à 5, **caractérisé en ce que** lesdites impulsions de tonalité sont générées dans un format asynchrone.

7. Système selon la revendication 6, **caractérisé en ce que** ledit format asynchrone comporte 1 bit de départ, 8 bits de données et 1 bit d'arrêt.

8. Système selon la revendication 7, dans lequel lesdits bits de données représentent un niveau logique "1" ou un niveau logique "0".

9. Système selon la revendication 8, **caractérisé en ce que** l'un desdits niveaux logiques est représenté par une période de tonalité de 30 msec., suivie d'une période de non-tonalité de 10 msec., et l'autre desdits niveaux logiques est représenté par une période de tonalité de 10 msec., suivie d'une période de non-tonalité de 25 msec.

10. Système selon l'une quelconque des revendications précédentes, **caractérisé en ce que** lesdits signaux numériques sont représentés par deux niveaux logiques, l'un desdits niveaux logiques étant représenté par une période de tonalité de 30 msec., suivie d'une période de non-tonalité de 10 msec., et l'autre desdits niveaux logiques est représenté par une période de tonalité de 10 msec., suivie d'une période de non-tonalité de 25 msec.

11. Système selon l'une quelconque des revendications précédentes, **caractérisé en ce que** ledit moyen de décodage comporte un amplificateur (38), un filtre passe-bande à double contre-réaction (40) et un comparateur amplificateur opérationnel (44) connectés en série à un circuit de commande automatique de gain (42) connecté en parallèle auxdits amplificateur (38) et filtre passe-bande à double contre-réaction (40).

12. Système selon l'une quelconque des revendications précédentes, **caractérisé en ce que** ledit moyen de décodage comporte un transformateur d'isolement qui fournit lesdites impulsions de tonalité à un amplificateur opérationnel connecté en série à un filtre passe-bande à double contre-réaction (40), un circuit de commande de gain automatique (42) est connecté en parallèle auxdits amplificateur opérationnel et filtre passe-bande à double contre-réaction (40), la sortie dudit filtre à double contre-réaction (40) étant fournie comme entrée à un comparateur amplificateur opérationnel (44) qui fournit une sortie de signal numérique.

13. Système selon l'une quelconque des revendications précédentes, **caractérisé en ce que** le système de traitement d'eau (10) est un système adoucisseur d'eau.

14. Procédé pour aider un utilisateur à réparer un système de traitement d'eau, le procédé comprenant les étapes de :
mémorisation de données indicatives de l'état de fonctionnement du système de traitement d'eau (14),
détermination de l'existence d'une anomalie de fonctionnement dans le système de traitement d'eau ;
transmission desdites données sous forme d'impulsions de tonalités par l'intermédiaire d'un système téléphonique comportant un microphone,
réception desdites impulsions de tonalité transmises par le biais dudit système téléphonique, à un emplacement distant dudit système de traitement d'eau (10), et fourniture d'une sortie de signaux numériques indicatifs dudit état de fonctionnement dudit système de traitement d'eau (10),
traitement desdits signaux numériques pour fournir un affichage lisible dudit état de fonctionnement dudit système de traitement d'eau (10) à l'emplacement distant dudit système de traitement d'eau (10),
le procédé étant **caractérisé par** .
l'activation sélective par un utilisateur d'un générateur de tonalités (16) adapté en vue de générer lesdites impulsions de tonalité,
la fourniture, depuis l'emplacement distant dudit utilisateur, d'instructions adaptées en vue d'effectuer un changement de l'état de fonctionnement du système de traitement d'eau (10) pour corriger si possible un problème.

15. Procédé selon la revendication 14, dans lequel l'étape de détermination comporte la lecture par l'utilisateur de la sortie indiquant un problème avec le système de traitement d'eau (10).

16. Procédé selon la revendication 14, dans lequel l'utilisateur contacte le fournisseur de services de traitement d'eau en téléphonant à un fournisseur de services distributeur.

17. Procédé selon la revendication 16, dans lequel l'étape de transmission comporte le placement d'un microphone près du générateur de tonalités (16), lequel relaye des impulsions de tonalité sur le téléphone jusqu'à un moyen décodeur, lesquelles sont lues par le fournisseur de services distributeur soit sur une unité de visualisation d'un ordinateur individuel, soit sur un rapport imprimé.

18. Procédé selon la revendication 17, dans lequel ledit utilisateur rectifie le problème après avoir reçu des instructions du fournisseur de services distributeur.
